# EUROPÄISCHE PATENTANMELDUNG

(11) **EP 1 394 896 A1**
(43) Veröffentlichungstag der Anmeldung: **03.03.2004**
(21) Anmeldenummer: 02019385.0
(22) Anmeldetag: 29.08.2002
(51) Int. Cl.: H01Q 3/24, H04Q 7/36

(54) **Ansteuerung einer Antennenanordnung, deren Umfeld in Sektoren unterteilt ist, um die Signalqualität einer Empfangstation an der Sektorengrenze zu verbessern**

(71) Anmelder: SIEMENS AKTIENGESELLSCHAFT, 80333 München (DE)
(72) Erfinder: Ball, Carsten, Dr., 76764 Rheinzabern (DE); Ivanov, Kolio, Dr., 81369 München (DE)

(57) **Zusammenfassung**

Die Erfindung bezieht sich auf ein Verfahren zum Ansteuern einer Antennenanordnung (AN) eines Funk-Kommunikationssystem, bei dem der Sendebereich (R) der Antennenanordnung (AN) in Sektoren (A,B,C,D) unterteilt ist und
- die Antennenanordnung (AN) derart angesteuert wird, dass ein Signal in zumindest einen ersten Sektor gerichtet ausgesendet wird, in dessen Empfangsbereich sich eine empfangende Station (MS) für das Signal befindet,
- wobei bei Annäherung, Eintritt oder Aufenthalt der empfangenden Station (MS) an/in einem dem ersten Sektor (D) benachbarten zweiten Sektor (C) die Ansteuerung der Antennenanordnung (AN) zum Aussenden des Signals in den zweiten Sektor (C) durchgeführt wird.

Zum Vermeiden des Ansteuerns einer Rundfunk-Antenne (BCAN) bei nicht ausreichendem Empfang der empfangenden Station (MS) in einem der Sektoren (A-D) oder nicht möglicher ausreichender Zuordnung der empfangenden Station (MS) zu einem der Sektoren (A-D) wird vorgeschlagen, dass die angesteuerten Sektoren (A,B,C) alternierend angesteuert werden, so dass zwischen den zumindest zwei Sektoren (B,C) hin- und hergeschaltet wird.

## Beschreibung

Die Erfindung bezieht sich auf ein Verfahren zum Ansteuern einer Antennenanordnung mit einem in Sektoren aufgeteilten Umfeld gemäß den oberbegrifflichen Merkmalen des Patentanspruchs 1.

Bei Funk-Kommunikationssystemen, insbesondere gemäß dem Standard GSM (Global System for Mobile Communication) oder UMTS (Universal Mobile Telecommunications System) ist es bekannt, mit Hilfe einer entsprechend angesteuerten Antennenanordnung Signale nur in bestimmte Richtungen auszusenden. Dadurch wird der Sendebereich einer Sendestation in Sektoren bzw. Sub-Sektoren aufgeteilt, so dass bei Kenntnis des Standortes einer empfangenden Station nur in deren Richtung gesendet werden muss. Dies führt einerseits zu einer Energieeinsparung beim Abstrahlen des Signals und andererseits zu einer größeren Anzahl verwaltbarer empfangender Stationen, da ein- und dieselbe Ressource, z.B. eine Frequenz für verschiedene empfangende Stationen verwendet werden kann, welche sich in verschiedenen Sektoren befinden.

Bei sogenannten "Switched Beam"- Systemen, also Systemen mit einer gezielten Umschaltung eines gerichteten oder gewichteten Sendestrahls wird das Umfeld bzw. die sogenannte Zelle einer Antenne bzw. Antennenanordnung in mehrere Subsektoren unterteilt. Insbesondere werden dabei Funkzellen in einem ersten Schritt durch die Verwendung von z.B. 120°-Antennen in mehrer Sektoren unterteilt, die dann wiederum mit Hilfe von z.B. 4 x 30° bzw. 8 x 15°-Antennen in Sub-Sektoren unterteilt werden. Anhand des Empfangssignals bei Übertragungen von der später empfangenden Station in Aufwärtsrichtung (Uplink) zu der später sendenden Station wird die teilnehmerseitige, später empfangende Station lokalisiert. Nach der Lokalisierung sendet die zentrale Sendestation mit der Antennenanordnung bei Übertragungen in Abwärtsrichtung (Downlink) nur noch in den am Besten geeigneten Sub-Sektor. Dadurch wird die Sendeleistung stark gebündelt und damit die Interferenz im Sendebereich reduziert.

Bei der Verwendung sogenannter Smart Antennas als Sendeantennen, besteht die Sendeantenne aus einer Antennenanordnung (Antennenarray). Durch eine geeignete Phasenansteuerung der einzelnen Antennendipole wird die Hauptstrahlrichtung der Antennenanordnung, welche im Allgemeinen ebenfalls ein schmales Antennenpattern hat, direkt auf die empfangende Station ausgerichtet. Unter einem Pattern wird das Antennendiagramm oder Muster verstanden, welches sich durch die Phasenansteuerung einstellen lässt.

Ein großes Problem besteht darin, dass die Senderichtung zu der empfangenden Station meistens nicht genau genug zu detektieren ist. Ein Lösungsansatz für dieses Problem besteht darin, dass oftmals von der Sub-Sektor-Antenne bzw. einem schmalen Strahl (narrow beam) der smart antenna auf die Vollsektorantenne (Broadcast-Antenne) umgeschaltet wird, welche die ganze Funkzelle um die Antennenanordnung abdeckt. Dies führt jedoch zum Leistungsverlust und zur Erhöhung der Interferenz.

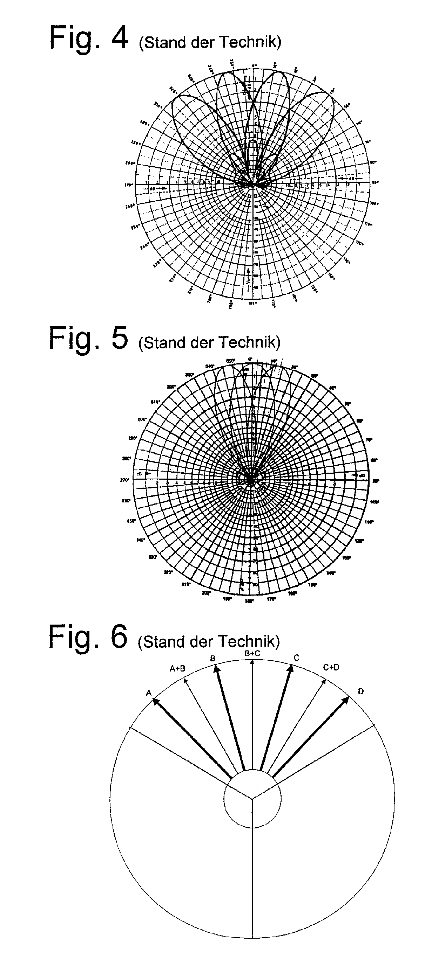

Ein weiteres Problem besteht bei geschalteten Strahlen (switched beams) darin, dass zwischen den Sub-Sektor-Antennen ein kleiner Einbruch in den Antennenpattern festzustellen ist, wodurch der Antennengewinn zwischen zwei Sub-Sektoren etwas kleiner als in den Sub-Sektor-Mittenbereichen ist, wie dies aus Fig. 4 ersichtlich ist.

Die Aufgabe der Erfindung besteht darin, ein verbessertes Verfahren zum Ansteuern einer Antennenanordnung mit Sub-Sektoren oder einem in Sektoren unterteilten Umfeld vorzuschlagen.

Diese Aufgabe wird durch das Verfahren zum Ansteuern einer Antennenanordnung mit den Merkmalen des Patentanspruchs 1 bzw. eine Sendestation zum Durchführen eines solchen Verfahrens mit den Merkmalen des Patentanspruchs 11 gelöst.

Das alternierende Umschalten der Strahlrichtung zwischen benachbarten Sektoren, in denen sich eine empfangende Station befindet, birgt zwar die Gefahr einer gewissen Verschlechterung der Übertragungsqualität eines Sprach- oder Daten-Übertragungsblocks, jedoch überwiegen die Vorteile für das Gesamtsystem. Für den Fall einer nicht ausreichenden Übertragungsqualität kann empfängerseitig problemlos eine erneute Übertragung angefordert werden, was zu einer erhöhten Sendebelastung führt. Insgesamt überwiegen jedoch die Vorteile durch den Interferenzgewinn gegenüber einer ansonsten erforderlichen Ansteuerung mehrerer Subsektoren oder gar der Vollsektorantenne. Außerdem ist ein Energiegewinn zu verzeichnen, da selbst die zeitweilig erforderliche wiederholte Aussendung eines Übertragungsblocks zu der empfangenden Station weniger Energie verbraucht, als die andernfalls dauerhaft erforderliche Aussendung der Übertragungsblöcke in einen größeren Bereich oder womöglich den gesamten möglichen Sendebereich.

Vorteilhafte Ausgestaltungen sind Gegenstand abhängiger Ansprüche.

Vorteilhafterweise wird als Kriterium für die Anwendung des Verfahrens ein Schwellenwert eingeführt, beispielsweise eine Bestätigung der empfangenden Station, dass das empfangene Signal ausreichend stark ist oder einen bestimmten Schwellenwert überschreitet. Dadurch kann sichergestellt werden, dass bei einem guten Empfang seitens der empfangenden Station in einem bestimmten der Sektoren für zukünftige Übertragungen die Signale nur in diesem besonders geeigneten oder ausreichend geeigneten Sektor ausgesendet werden. Dies führt zu einer weiteren Interferenzreduzierung im Vergleich zu dem fortgesetzten alternierenden Aussenden von Signalen in verschiedene Sektoren bzw. bei der Verwendung von Sub-Sektorantennen in verschiedene Sub-Sektoren.

Vorteilhafterweise kann bei der alternierenden Umschaltung zwischen Aussendungen in verschiedene Sektoren bzw. Sub-Sektoren eine Wichtung vorgenommen werden, bei der das ausgesendete Signal in einen der verwendeten Sektoren bzw. Sub-Sektoren länger als in einen anderen der verwendeten Sektoren bzw. Sub-Sektoren ausgesendet wird. Dies kann insbesondere bedeuten, dass zum Beispiel in einem ersten Sektor jeweils drei Übertragungsblöcke ausgesendet werden, während in einem zweiten Sektor nur ein einziger Übertragungsblock ausgesendet wird. Dadurch kann zum Beispiel ausgetestet werden, ob empfängerseitig im Laufe der Zeit möglicherweise ein besserer Empfang über den zweiten, kürzer verwendeten Sektor möglich ist, als über den hauptsächlich verwendeten Sektor, so dass in einem solchen Fall die Wichtung geändert werden kann oder gar eine vollständige Umschaltung vorgenommen werden kann.

In mehr als einen der Sektoren bzw. Sub-Sektoren gleichzeitig zu senden, ermöglicht beispielsweise zu einem ersten Zeitpunkt eine Aussendung eines Signals in einen ersten Sektoren bzw. Sub-Sektor vorzunehmen und alternierend dazu eine zweite Aussendung in zugleich die beiden dem ersten Sektoren bzw. Sub-Sektor benachbarten Sektoren bzw. Sub-Sektoren vorzunehmen. Diese Funktion ist insbesondere dann vorteilhaft, wenn der Standort der empfangenden Station nur grob bestimmt werden kann und unklar ist, ob ein Empfang über den zentralen ersten Sektoren bzw. Sub-Sektor oder möglicherweise einen der benachbarten Sektoren bzw. Sub-Sektoren besser möglich ist.

Mit unterschiedlicher Sendeleistung in die alternierend angesteuerten Sektoren zu Senden, ermöglicht eine geringe Sendeleistung für einen Sektoren bzw. Sub-Sektor zu verwenden, in welchem sich die empfangende Station zentraler befindet, und eine stärkere Sendeleistung für einen Sektoren bzw. Sub-Sektor zu verwenden, in dessen Sendebereich sich die empfangende Station zunehmend weiter hineinbewegt.

Vorteilhafterweise überlappen sich die Sektoren bzw. Sub-Sektoren nur minimal, da durch die alternierende Umschaltung benachbarter Sektoren bzw. Sub-Sektoren sichergestellt ist, dass eine gegebenenfalls zweifach, also einmal pro Sektoren bzw. Sub-Sektor vorgenommene Übertragung eines Übertragungsblocks über zumindest einen der beiden Sektoren bzw. Sub-Sektoren erfolgreich empfangen werden sollte. Bei der Planung der Sektoreneinteilung kann somit eine Vereinfachung des Gesamtsystems durch eine Reduzierung der Sektoren bzw. Sub-Sektorenanzahl vorgenommen werden.

Insbesondere bei unklarem Standort der empfangenden Station ist es vorteilhaft, zwischen drei oder mehr einander benachbarten Sektoren alternierend umzuschalten, um sicherzustellen, dass die empfangende Station erreicht wird.

Die Durchführung der Verfahrensweise wird vorteilhafterweise nur dann vorgenommen, falls eine empfangende Station keinem der Sektoren bzw. Sub-Sektoren eindeutig zugeordnet werden kann und somit nicht ausreichend sicher gestellt ist, dass Übertragungsblöcke bzw. Signale mit ausreichender Qualität bei der empfangenden Station eintreffen. Nachdem die empfangende Station einem der Sektoren bzw. Sub-Sektoren eindeutig zugeordnet werden kann bzw. in einem der Sektoren einen ausreichend guten Empfang hat, kann die Durchführung des Verfahrens mit der alternierenden Ansteuerung verschiedener Sektoren bzw. Sub-Sektoren eingestellt werden, bis die Empfangsqualität zu einem späteren Zeitpunkt möglicherweise nicht mehr ausreichend gut ist.

In besonders kritischen Fällen kann von dem Verfahren mit alternierender Ansteuerung verschiedener Sektoren bzw. Sub-Sektoren auch auf eine Vollsektor-Antenne umgeschaltet werden, wie dies für sich genommen bekannt ist. Die Verfahrensweise mit der alternierenden Umschaltung zwischen verschiedenen Sektoren bzw. Sub-Sektoren stellt somit eine Zwischenstufe zwischen den bekannten Verfahrensschritten entweder des Ansteuerns eines festen Sektoren bzw. Sub-Sektors oder des Ansteuerns der Vollsektorantenne dar.

Als Umschaltzeitpunkte für die alternierende Ansteuerung verschiedener Sektoren bzw. Sub-Sektoren können zweckmäßigerweise die Grenzen zwischen einzelnen Übertragungsblöcken oder zwischen einzelnen Bursts gewählt werden, so dass jeweils vollständige Datenübertragungsblöcke bzw. Teile von denen in die Sektoren bzw. Sub-Sektoren ausgesendet werden.

Für das System mit geschalteten Strahlen wäre es für den Fall einer empfangenden Station, die sich auf einer Sub-Sektor-Grenze befindet, auch möglich, jeweils beide Sub-Sektor-Antennen anzusteuern, dies führt jedoch durch die Überlagerung zur Ausbildung eines Mittelstrahls, wie dies aus Fig. 5 ersichtlich ist. Fig. 6 skizziert diesbezüglich Hauptstrahlrichtungen A, B, C und D von vier zueinander benachbarten Sub-Sektoren sowie die Mittelstrahlen A+B, B+C, C+D, die sich durch das gleichzeitige Ansteuern von zwei Hauptstrahlrichtungen A und B, B und C bzw. C und D ergeben. Nachteilig ist dabei jedoch, dass die Ansteuerung der beiden benachbarten Sub-Sektor-Antennen zu sehr harten Randbedingungen für die Phasengenauigkeit der Ansteuerung führt. Bereits geringe variierende Kabellängen bei der Verlegung der Kabel zwischen der Sendestation und den Antennen oder geringe Temperaturänderungen führen zu einer Verdrehung des Mittelstrahls. Um dies zu vermeiden, wäre ein hoher Hardware- und Software-Aufwand erforderlich, somit ein teuerer Regelmechanismus.

Gemäß dem nun vorliegenden Verfahren kann für Teilnehmer zwischen zwei Sektoren bzw. Sub-Sektoren eine solche Ausbildung eines Mittelstrahls vorteilhafterweise vermieden werden.

Vorteilhafterweise wird eine Sendestation eines Funk-Kommunikationssystems lediglich um entsprechende Steuerfunktionen erweitert, so dass eine Implementierung der Verfahrensweise einfach und kostengünstig umsetzbar ist. Anwendbar ist die Verfahrensweise insbesondere bei der Verwendung bereits für sich bekannter Switched-Beam-Systeme und/oder von Systemen mit Smart Antennas bzw. vergleichbaren derzeitigen und zukünftigen Funk-Kommunikationssystemen.

Ein Ausführungsbeispiel zur Veranschaulichung der Verfahrensweise wird nachfolgend anhand der Zeichnung näher erläutert.
Es zeigen:
- Fig. 1: eine Draufsicht auf eine Sendestation mit einer Antennenanordnung und skizzierten Sendebereichen verschiedener Sektoren;
- Fig. 2: eine solche Anordnung gemäß einer alternativen Ausführungsform;
- Fig. 3: eine Abfolge von Zeitdiagrammen zur Veranschaulichung der Sendereihenfolge bzw. Ansteuerung verschiedener Sektoren;
- Fig. 4: die Sendebereiche eines Switched-Beam-Systems gemäß dem Stand der Technik;
- Fig. 5: eine solche Verteilung für ein Switched-Beam-Stystem mit gleichzeitig angesteuerten direkt benachbarten Sektoren und
- Fig. 6: die Hauptstrahlrichtungen der Sub-Sektoren und Mittelstrahlen dazu.

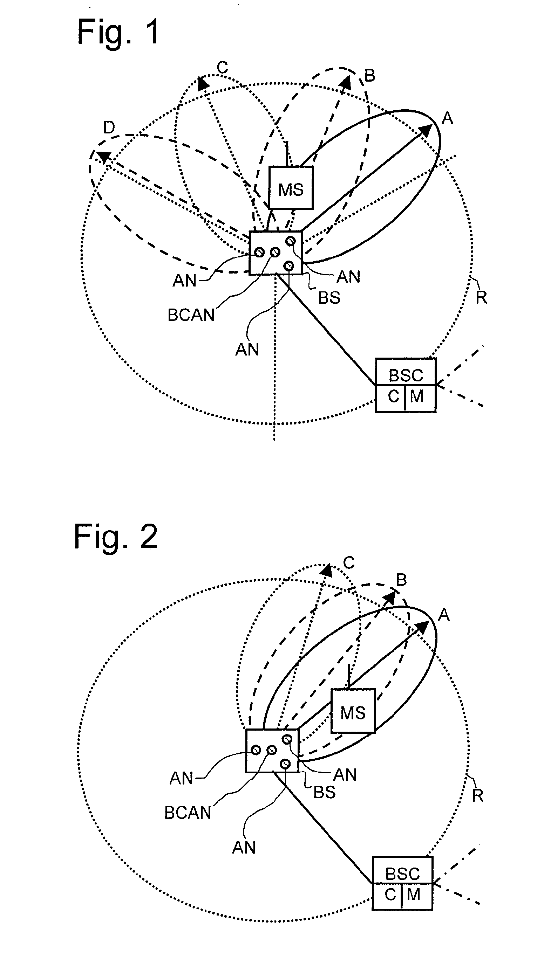

Wie dies aus Fig. 1 ersichtlich ist, besteht ein Funk-Kommunikationssystem aus einer Vielzahl verschiedenartigster Vorrichtungen und Funktionalitäten, von den nur einzelne skizziert sind. Zwar ist ein Funk-Kommunikationssystem dargestellt, bei dem ortsfeste Sendestationen bzw. Sende- und Empfangsstationen BS an ein Netz aus einer Vielzahl weiterer Vorrichtungen fest angeschlossen sind, eine Übertragung auf andersartige Funk-Kommunikationssysteme ist aber auch möglich. Beispielsweise ist die Übertragung auf sogenannte Ad-Hoc-Funksysteme möglich, bei denen einzelne Sende- und Empfangsstationen ohne eine feste Koordinatenvorgabe von einer anderen Systemeinrichtung selber den Zugriff auf verfügbare Ressourcen steuern und ggf. mit anderen derartigen Stationen aushandeln. Auch solche Stationen können über eine Antennenanordnung verfügen, mit der Aussendungen in Sektoren des Umgebungsbereiches möglich sind.

Bei dem dargestellten Funk-Kommunikationssystem ist eine Basisstation BS als Sende- und Empfangsstation mit einer Antennenanordnung AN ausgestattet, welche das Aussenden von Signalen gerichtet in einzelne Sub-Sektoren A,B,C,D des umgebenden möglichen Sendebereichs R ermöglichen. Die Basisstation BS selber oder eine damit verbundene Basisstations-Steuereinrichtung BSC verfügen über eine Steuereinrichtung C, welche den Betriebsablauf und den Sende- und Empfangsablauf steuert. Insbesondere bereitet die Steuereinrichtung C zu versendende Daten derart auf, dass diese über die Antennenanordnung AN, im vorliegenden Fall eine Anordnung aus drei einzelnen Antennenelementen durch entsprechende Ansteuerung gezielt in den Bereich eines oder mehrerer Sektoren bzw. hier Sub-Sektoren A-D gesendet werden. Zur Bereitstellung von Steueralgorithmen und ggf. Datentabellen ist die Steuereinrichtung C zweckmäßigerweise mit einem Speicher M gekoppelt. Die Basisstations-Steuereinrichtung BSC ist mit weiteren Einrichtungen, beispielsweise einem Betriebs- und Wartungszentrum sowie Heimatregistern und dergleichen und auch Schnittstellen zu anderen Kommunikationssystemen gekoppelt, welche zur Vereinfachung der Darstellung nicht abgebildet sind.

Die Basisstation BSC weist neben der Antennenanordnung AN aus drei einzelnen Antennenelementen zum Aussenden gerichteter Signale in ausgewählte der Sub-Sektoren A-D auch eine übliche Vollsektorantenne (Broadcast-Antennte) BCAN auf. Mit dieser können Signale rundum in den gesamten Sendebereich R ausgesendet werden. Weiterhin abgebildet ist eine grobe Untergliederung in drei Hauptsektoren, welche wiederum in die vier dargestellten Sektoren A-D als Sub-Sektoren untergliedert sind, wie dies beispielsweise bei den Systemen mit geschaltetem Strahl (Switched-Beam) üblich ist. Bei der dargestellten Ausführungsform befindet sich die empfangende Station MS, beispielsweise eine mobile Teilnehmerstation oder ein mobiler Computer für den Anschluss an ein funkgestütztes Daten-Kommunikationssystem in dem Überlappungsbereich der beiden Sub-Sektoren BC, wobei die empfangende Station MS sich weiter im Bereich des ersten dieser Sub-Sektoren B befindet und im Randbereich des zweiten dieser Sub-Sektoren C befindet.

Bei einer gerade in solchen Situationen ungenauen Lokalisierung bzw. Detektion der empfangenden Station MS innerhalb des Sendebereichs R bzw. der Funkzelle wird verfahrensgemäß nicht in üblicher Art und Weise auf die Vollsektor-Antenne BCAN umgeschaltet, sondern alternierend zwischen den beiden Sub-Sektoren B,C hin- und hergeschaltet. In der einfachsten Ausführungsform würde abwechselnd pro zu versendendem Datenübertragungsblock bzw. Burst der erste Sub-Sektor B oder der zweite Sub-Sektor C dieser beiden Sektoren angesteuert.

In der einfachsten Ausführungsform wird somit abwechselnd ein Übertragungsblock in den Sub-Sektor B, danach in den Sub-Sektor C und dann wieder in den Sub-Sektor B usw. ausgesendet. Dabei kann wahlweise jeweils pro Sendevorgang ein neuer Datenübertragungsblock ausgesendet werden, möglich ist aber bei kritischen Übertragungssituationen auch das Aussenden eines Datenübertragungsblocks erst in den ersten dieser beiden Sub-Sektoren B und dann das wiederholte Aussenden des gleichen Datenübertagungsblocks in den zweiten dieser beiden Sub-Sektoren C, bevor ein weiterer Datenübertragungsblock wiederum nacheinander in die beiden Sub-Sektoren B,C ausgesendet wird. Als kritisch kann dabei eine empfangende Station MS angesehen werden, welche sich nur in dem äußeren Randbereich eines der beiden Sub-Sektoren C befindet, so dass bei der Übertragung über diesen Sub-Sektor C mit höherer Wahrscheinlichkeit von nicht akzeptierbaren Datenverlusten und dem Erfordernis einer Neuübertragung auszugehen ist.

Erst in Fällen, bei denen eine derartige alternierende Ansteuerung verschiedener Sub-Sektoren B,C keine ausreichende Datenübertragungsqualität ermöglicht, wird auf die Aussendung über die Vollsektor-Antenne BCAN umgeschaltet.

Vorteilhafterweise kann bei einer solchen Verfahrensweise ähnlich der Wasserverteilung bei einem "Rasensprenger" der Abdeckungsbereich verschiedener angesteuerter Sub-Sektoren A-D je nach Genauigkeit der ermittelbaren Position der empfangenden Station MS eingeschränkt bzw. aufgeweitet werden. Im Gegensatz zu dem Verwenden der Vollsektor-Antenne BCAN geht der Interferenzgewinn nicht vollständig verloren, sondern wird allenfalls bei Ansteuerung einer größeren Anzahl von Sub-Sektoren gegenüber der Ansteuerung eines einzelnen Sektors eingeschränkt.

Für den Fall, dass bei der alternierenden Aussendung von Datenübertragungsblöcken an verschiedene Sub-Sektoren ohne eine redundante Übertragung der Datenübertragungsblöcke einzelne Sprach- oder Daten-Übertragungsblöcke mit nicht ausreichender Qualität übertragen werden, können übliche Verfahren zur Neuanforderung der Übertragung oder zur Anforderung redundanter Daten eingesetzt werden, so dass der Teilnehmer der empfangenden Station MS die mögliche Verschlechterung der Übertragungsleistung gegenüber einem sehr guten Empfang in einem einzelnen Sub-Sektor oder über die Vollsektor-Antenne BCAN kaum oder nicht feststellen wird.

Vorteilhafterweise wird durch den Wechsel auf Burst-Basis bzw. Frame-Basis zwischen benachbarten Antennenelementen der Antennengruppe AN bzw. Sub-Sektoren A und B, B und C bzw. C und D kein Mittelstrahl A+B erzeugt, so dass die Übertragungsqualität gegenüber dem gleichzeitigen Ansteuern zweier benachbarter Sektoren deutlich verbessert wird.

Fig. 2 zeigt im wesentlichen eine baulich gleiche Anordnung wie die der Fig. 1, weshalb von einer Wiederholung der Beschreibung abgesehen wird. Dargestellt sind drei Sub-Sektoren A, B, C, welche sich soweit überlappen, dass die beiden rechts bzw. links benachbarten Sektoren A, C des mittleren Sub-Sektors B einander noch überlappen.

Dargestellt ist eine Situation, bei der sich die empfangende Station MS, zentral in dem ersten dargestellten Sub-Sektor A befindet, noch relativ weit im Sendebereich des zweiten dargestellten Sub-Sektors B befindet und auch noch im Randbereich des Sendebereichs des dritten Sub-Sektors C befindet. Die empfangende Station MS kann somit Signale von allen drei Sektoren sowie weiteren der ersten Station A benachbarten und nicht dargestellten Sektoren empfangen.

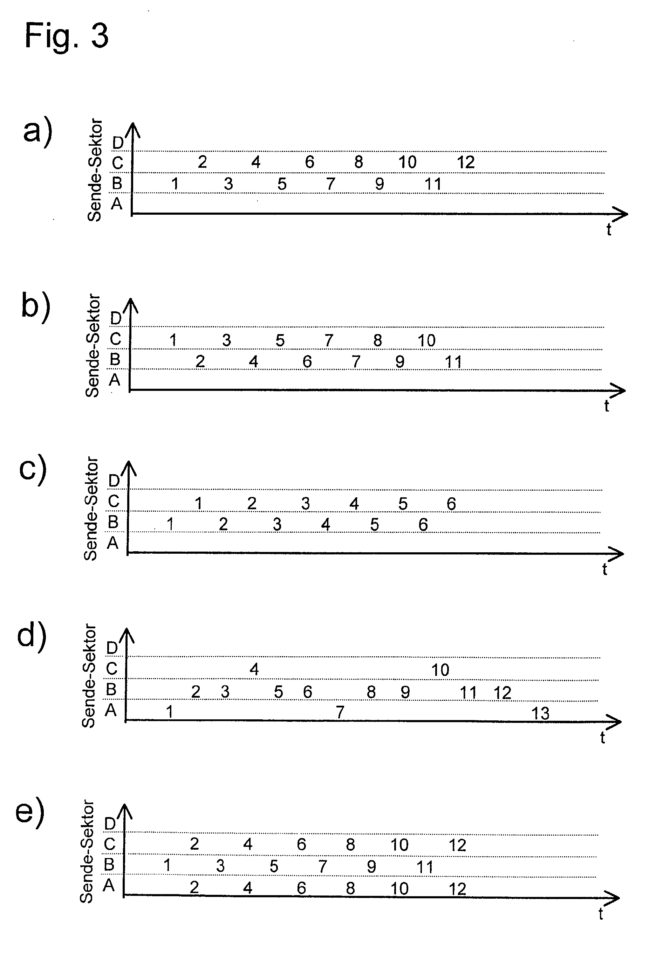

Wie bereits anhand der Beschreibung zu Fig. 1 angegeben, sind verschiedene Ansteuerabfolgen für die einzelnen Sub-Sektoren A-D verwendbar. Fig. 3 mit den Diagrammen a-e stellt vier beispielhafte Schemata dar, bei denen über der Zeitachse t die Sub-Sektoren A-D markiert sind, über welche eine zeitliche Abfolge der Ansteuerung zum Senden vorgenommen wird. Die Zahlenwerte sollen dabei Übertragungsblock-Nummern verdeutlichen, wobei gleiche Zahlenwerte Situationen darstellen sollen, bei denen ein und derselbe Datenübertragungsblock zeitlich aufeinanderfolgend über verschiedene Sub-Sektoren wiederholt oder zeitgleich über verschiedene Sub-Sektoren parallel übertragen wird.

Das Diagramm a stellt einen Ansteuerablauf dar, bei dem sich die empfangende Station MS, wie beispielsweise in Fig. 1 dargestellt, im Überlappungsbereich zweier Sub-Sektoren B,C befindet. Abwechselnd werden die beiden Sub-Sektoren B,C angesteuert, wobei jeweils ein neuer Datenübertragungsblock 1,2,3 ... übertragen wird.

Für den Fall, dass ein Datenübertragungsblock 1,2,3 ... bei einer derartigen Übertragung von der empfangenden Station MS nicht oder mit nicht ausreichender Qualität empfangen wird, erfolgt eine erneute oder redundante Übertragung, wie dies anhand des Diagramms b für den Fall des siebten Datenübertragungsblocks 7 dargestellt ist. Nach einer fehlerhaften Übertragung über den zweiten Sub-Sektor C, in dessen äußerem Randbereich sich die empfangende Station MS befindet, wird eine wiederholte Übertragung dieses Datenübertragungsblocks 7 über den Sub-Sektor B vorgenommen.

In kritischen Sende- und Empfangssituationen, beispielsweise bei einer empfangenden Station im Überlappungsbereich zweier Sub-Sektoren B, C oder bei störender Interferenz durch Mehrwegeausbreitung oder andere Störquellen, kann vorteilhafterweise eine alternierende Ansteuerfolge gewählt werden, bei der jeder Datenübertragungsblock 1, 2, 3, ... jeweils erst über den einen Sub-Sektor B und dann über den anderen Sub-Sektor C übertragen wird, bevor der nächste Datenübertragungsblock wiederum abwechselnd über beide Sub-Sektoren B, C von der Antennenanordnung AN ausgesendet wird. Dies ist im Diagramm c skizziert.

Das Diagramm d zeigt den bereits erläuterten Verfahrensablauf, bei dem sich die empfangende Station MS im Bereich von mehreren Sub-Sektoren A, B, C befindet. Dabei wird ein zentraler Sub-Sektor B häufiger angesteuert als die benachbarten Sub-Sektoren A, C. Bei dem beispielhaften Ablauf werden die beiden äußeren Sub-Sektoren A, C nur bei jeder sechsten Übertragung verwendet, während der zentrale Sub-Sektor B pro Abfolgezyklus insgesamt viermal angesteuert wird.

Vergleichbare Steuerabfolgen können auch bei nur zwei angesteuerten Sub-Sektoren verwendet werden, wenn sich die empfangende Station MS beispielsweise im Randbereich eines Sub-Sektors befindet. Über diesen Sub-Sektor empfängt die Station dann z.B. nur jede dritte Übertragungsabfolge einen Datenübertragungsblock und ansonsten jeweils aufeinanderfolgend mehrere Datenübertragungsblöcke über den Sub-Sektor, in dem sie sich zentraler befindet.

Eine andere Situation mit einer Ansteuerung von mehr als zwei Sub-Sektoren A-C ist in dem Diagramm e veranschaulicht. Beispielsweise bei einer empfangenden Station MS mit einem ungenau detektierbaren Aufenthaltsort mit einer vermutlichen Lage zentral in einem zweiten Sub-Sektor B aber möglicherweise auch einem Aufenthaltsort eher in einem ersten oder dritten Sub-Sektor A, C kann sinnvollerweise alternierend der vermutlich zentrale zweite Sub-Sektor B in einem ersten, dritten, fünften usw. Schritt angesteuert werden, während die beiden diesem benachbarten ersten bzw. dritten Sub-Sektoren A, C in dem jeweils dazwischenliegenden Schritt parallel zueinander angesteuert werden. Eine solche Ansteuerung ist insbesondere dann vorteilhaft, wenn die beiden äußeren Sub-Sektoren A, C einander nicht überlappen.

Insbesondere Steuerschemata, wie sie anhand der Diagramme d und e beschrieben sind, eignen sich auch für den Fall einer sich bewegenden empfangenden Station MS, um indirekt durch entsprechende Rückmeldungen der empfangenden Station MS über die Empfangsqualität von getätigten Aussendungen auf die Bewegung der empfangenden Station in einen anderen Sub-Sektor zu schließen und zu einem möglichst früh geeigneten Zeitpunkt jeweils überwiegend Aussendungen in den als ideal bestimmten Sub-Sektor A, B oder C vornehmen zu können.

Vorteilhafterweise werden durch eine solche Ansteuerung von Sub-Sektoren A-D auch abrupte Wechsel und damit erforderliche Entscheidungen innerhalb des Kommunikationssystems vermieden, wenn sich die empfangende Station MS schnell durch den Sendebereich R und damit durch verschiedene Sub-Sektoren A-D bewegt. Insbesondere bei unscharfen Detektionsbedingungen des Aufenthaltsortes der empfangenden Station MS ist für die jeweilige Auswahl der anzusteuernden Sub-Sektoren auch der Einsatz eines Algorithmus auf Basis der sogenannten Fuzzy-Theorie oder dergleichen einsetzbar.

Durch leichte Variation der Antennenwechsel, beispielsweise das zufällige oder gezielte Ansteuern eines neuen bzw. bislang nicht verwendeten Sub-Sektors, und das Auswerten von Messwerten der empfangenden Station nach entsprechenden Mitteilungen über die Abwärtsverbindung kann eine optimale Sektorantenne zur Ansteuerung des ideal geeigneten Sub-Sektors A-D ausgeregelt werden.

Im Fall von Mehrfachreflexionen (Multipath-Effekt) kann insbesondere auf Burst-Basis zwischen den Sub-Sektoren mit der größten Einstrahlung gewechselt werden, auch wenn diese nicht zwangsläufig nebeneinander liegen. Z.B. könnten Sub-Sektor A und Sub-Sektor D im Wechsel alternierend angesteuert werden.

Prinzipiell funktioniert die Verfahrensweise mit einer beliebigen Anzahl von Sektoren bzw. Subsektoren. Auf Smart-Antennas kann das Verfahren angewendet werden, indem man die Hauptkeule (Narrow-Beam) um die vermutete Richtung der empfangenden Station MS schwanken lässt, indem die Phasenansteuerung der Antennendipole entsprechend modifiziert wird.

Besondere Vorteile sind somit die Einsparung eines Mittel-Beams mit allen entsprechenden Nachteilen und Hardware-Aufwenden durch eine kostengünstige Softwarelösung. Ferner ist eine Emulierung eines Mittel-Beams durch den schnellen Wechsel zwischen benachbarten Sektorantennen bzw. Subsektorantennen möglich. Bei ungenauer Lokalisierung der empfangenden Station MS kann durch einen schnellen Antennenwechsel in der Art eines Rasensprengers das Zurückschalten auf eine Vollsektor-Antenne BCAN vermieden werden. Die Kapazitätsgewinne bleiben trotzdem zumindest teilweise erhalten.

Die Unterscheidung zwischen Sektoren und Sub-Sektoren ist nicht zwingend, da die Verfahrensweise auch auf andere Systeme anwendbar ist. Entscheidend ist ein Untergliederung des Sendebereichs um einen Sendestandort bzw. um eine Antennenanordnung herum, z.B. in Sektoren oder die beschriebenen Sektoren und zusätzliche Sub-Sektoren.

## Patentansprüche

1. Verfahren zum Ansteuern einer Antennenanordnung (AN) eines Funk-Kommunikationssystems, bei dem der Sendebereich (R) der Antennenanordnung (AN) in Sektore (A, B, C, D) unterteilt ist und
- die Antennenanordnung (A - D) derart angesteuert wird, dass ein Signal in zumindest einen ersten Sektor gerichtet ausgesendet wird,
- in dessen Empfangsbereich sich eine empfangende Station (MS) für das Signal befindet,
- wobei bei Annäherung, Eintritt oder Aufenthalt der empfangenden Station (MS) an/in einen dem ersten Sektor (D) benachbarten zweiten Sektor (C) die Ansteuerung der Antennenanordnung (AN) zum Aussenden des Signals in den zweiten Sektor (C) durchgeführt wird,
**dadurch gekennzeichnet, dass**
- die angesteuerten Sektoren (A, B, C) alternierend angesteuert werden, so dass zwischen den zumindest zwei Sektoren (B, C) hin- und hergeschaltet wird.

2. Verfahren nach Anspruch 1, bei dem
das alternierende Ansteuern von Sektoren (A - C) unterhalb eines Qualitätsmerkmals, insbesondere eines Schwellenwertes durchgeführt wird.

3. Verfahren nach Anspruch 1 oder 2, bei dem
zusätzlich zur alternierenden Ansteuerung der Sektoren (A - C) für ausgewählte dieser Sektoren eine Wichtung vorgenommen wird, wobei zumindest einer der Sektoren (B) häufiger angesteuert wird, als die anderen angesteuerten Sektoren (A, C).

4. Verfahren nach einem vorstehenden Anspruch, bei dem
mehr als einer der Sektoren (A, C) aus der Vielzahl der Sektoren (A - D) gleichzeitig angesteuert wird, wobei die gleichzeitig angesteuerten Sektoren vorzugsweise nicht überlappen.

5. Verfahren nach einem vorstehenden Anspruch, bei dem
in den verschiedenen angesteuerten Sektoren (A - C) mit verschiedener Sendeleistung ausgesendet wird.

6. Verfahren nach einem vorstehenden Anspruch, bei dem
mehrere der Sektoren (A - D) einander überlappen.

7. Verfahren nach einem vorstehenden Anspruch, bei dem
drei oder mehr verschiedene Sektoren (A, B, C), in deren Bereich sich die empfangende Station (MS) befindet oder befinden müsste, alternierend angesteuert werden.

8. Verfahren nach einem vorstehenden Anspruch, bei dem
die alternierende Ansteuerung der Sektoren (A - D) durchgeführt wird, falls die empfangende Station (MS) keinem der Sektoren (A - D) eindeutig zugeordnet werden kann.

9. Verfahren nach einem vorstehenden Anspruch, bei dem
auf eine Rundfunk-Antenne (BCAN) umgeschaltet wird, falls die empfangende Station (MS) trotz der alternierenden Ansteuerung der einzelnen Sektoren (A - D) Signale nicht ausreichend empfängt.

10. Verfahren nach einem vorstehenden Anspruch, bei dem
die Ansteuerung eines jeweils anderen der Sektoren (A - D) jeweils mit dem Sendebeginn eines Burst, Datenübertragungsblocks bzw. Übertragungsrahmens durchgeführt wird.

11. Sendestation (BS, BSC) eines Funk-Kommunikationssystems mit
- einer Antennenanordnung (AN) zum sektorweisen Aussenden von Signalen zu einer empfangenden Station (MS) und
- einer Steuereinrichtung (C) zum Ansteuern der Antennenanordnung derart, dass einzelne Sektoren (A, B, C, D) ansteuerbar sind,
**dadurch gekennzeichnet, dass**
die Steuereinrichtung (C) ausgelegt ist, alternierend verschiedene der Sektoren (A - D) in zeitlicher Abfolge gemäß einem Verfahren nach einem der vorstehenden Ansprüche anzusteuern.

12. Sendestation nach Anspruch 11, mit
einem System zum Senden geschalteter Strahlen (Switched-Beam) und/oder einem Smart-Antennensystem als Antennenanordnung (AN).
